# EUROPEAN PATENT SPECIFICATION

(11) **EP 3 725 562 B1**
(45) Date of publication and mention of the grant of the patent: **12.07.2023**
(21) Application number: 18888817.6
(22) Date of filing: 06.11.2018
(51) Int. Cl.: B60C 13/00, B60C 13/02

(54) **TIRE**
REIFEN
PNEU

(30) Priority: 11.12.2017 JP 2017236710
(43) Date of publication of application: 21.10.2020
(73) Proprietor: Bridgestone Corporation, Chuo-Ku Tokyo 104-8340 (JP)
(72) Inventor: KAMADA, Shiho, Tokyo 104-8340 (JP)
(74) Representative: Marks & Clerk LLP
(86) International application number: PCT/JP2018/041104
(87) International publication number: WO 2019/116783

(56) References cited:
- EP-A1- 3 219 515
- FR-A1- 3 027 256
- JP-A- H0 341 751
- JP-A- H0 621 256
- JP-A- H08 505 266
- JP-A- H09 507 614
- JP-A- S60 200 542
- JP-A- S63 136 652
- JP-A- 2003 303 947
- JP-A- 2004 291 937
- JP-A- 2011 114 192

## Description

### [Technical Field]

The present invention relates to a tire capable of dealing with wear of a tire side portion, the tire being suitable to a demand for precision docking with high precision, in particular relates to a tire having a protrusion portion protruded from a surface of a side wall toward an outer side in a tire width direction.

### [Background Art]

Conventionally, a structure of a tire for trucks or buses that has a protrusion portion on a surface of a side wall in order to prevent damage of a tire side portion, specifically a surface of the side wall, caused by contacting a curbstone of a sidewalk, has been known.

For example, Patent Literature 1 discloses a tire for trucks or buses having a wing-like protrusion portion, which is protruded toward an outer side in a tire width direction, on a surface of a side wall closer to a tread.

The tire for trucks or buses is presupposed to be re-treaded (cold re-treaded) by using a vulcanized rubber sheet for a tread. Its object is to prevent the damage of a tire side portion of a base tire, which is to be extended in its lifetime by the re-treading forming the wing-like protrusion portion, so as to improve durability of the tire.

### [Citation List]

### [Patent Literature]

[PTL 1] Japanese Unexamined Patent Application Publication No. 2005-112010. Attention is also drawn to the disclosures of EP3 219 515, JP 2017 170 937, JP 2013 129385, JP 2004, 291937 and FR 3 027 256.

### [Summary of Invention]

In recent years, it is desired to improve so-called precision docking of a route bus that repeatedly stops at bus stops. The precision docking denotes a degree of a distance and a degree of a level difference between a sidewalk and a doorway when the bus stops at a bus stop. The getting on/off performance is enhanced by improving the precision docking.

However, when the precision docking is improved, the surface of the side wall of the tire is rubbed with a curbstone of the sidewalk and the tire side portion is severely worn, and as a result, the failure of the tire might be caused. It is accordingly considered to form the protrusion portion described above on the side wall and to replace (also called re-side) a part of the side wall including the protrusion portion depending on the wear.

However, in a case in which the protrusion portion is merely formed, the protrusion portion is not worn evenly, and therefore the side wall might be replaced although a part of the protrusion portion is largely remained.

Such a situation is unfavorable from a viewpoint of suppression of a cost for manufacturing and maintaining the tire and protection for the environment. Further, the increase of the rolling resistance and the weight caused by forming the protrusion portion should be avoided as much as possible due to a desire to improve an environmental performance.

Also, in a case in which the protrusion portion is merely formed, advertent stress is applied to the protrusion portion, and as a result, damage such as a crack might be generated in or around the protrusion portion.

Accordingly, an object of the present invention is, in consideration of the problem described above, to provide a tire for which a side wall having a protrusion portion thereon can be replaced, the tire being capable of achieving both of sufficient durability of the protrusion portion and high environment performance of the tire.

One aspect of the present invention is a tire as claimed in claim 1. A second aspect of the present invention is a tire as claimed in claim 4.

### [Brief Description of Drawings]

[Fig. 1] Fig. 1 is a side view illustrating a whole of a pneumatic tire 10.
[Fig. 2] Fig. 2 is an enlarged side view illustrating a part of a protrusion portion 110.
[Fig. 3] Fig. 3 is an enlarged side view illustrating a part of a first protrusion part 111 and a second protrusion part 160
[Fig. 4] Fig. 4 is a cross-sectional view illustrating the protrusion portion 110 taken along line F4-F4 in Fig. 2.
[Fig. 5] Fig. 5 is a cross-sectional view illustrating a part of a tire side portion 100 including the first protrusion part 111 taken along line F5-F5 in Fig. 2.
[Fig. 6] Fig. 6 is a schematic view illustrating the pneumatic tire 10, which is mounted to a vehicle (not shown), contacting a curbstone 300.
[Fig. 7] Fig. 7 is a side view illustrating a whole of a pneumatic tire 10A.
[Fig. 8] Fig. 8 is an enlarged side view illustrating a part of a protrusion portion 110A.
[Fig. 9] Fig. 9 is a side view illustrating a whole of a pneumatic tire 10B.
[Fig. 10] Fig. 10 is a cross-sectional view along a tire circumferential direction illustrating a protrusion portion 110B.
[Fig. 11] Fig. 11 is an enlarged side view illustrating a part of a first protrusion part 111C.
[Fig. 12] Fig. 12 is a side view illustrating a whole of a pneumatic tire 10D.
[Fig. 13] Fig. 13 is a side view illustrating a whole of a pneumatic tire 10E.
[Fig. 14] Fig. 14 is a cross-sectional view along the tire circumferential direction illustrating a protrusion portion 110F.
[Fig. 15] Fig. 15 is a cross-sectional view along the tire circumferential direction illustrating a protrusion portion 110G.

### [Description of Embodiments]

Hereinafter, embodiments of the present invention will be described with reference to the drawings. The same reference signs or similar reference signs are assigned to the same functions or the same components and the description thereof is omitted as needed.

### FIRST EMBODIMENT

### (1) Schematic whole configuration of tire

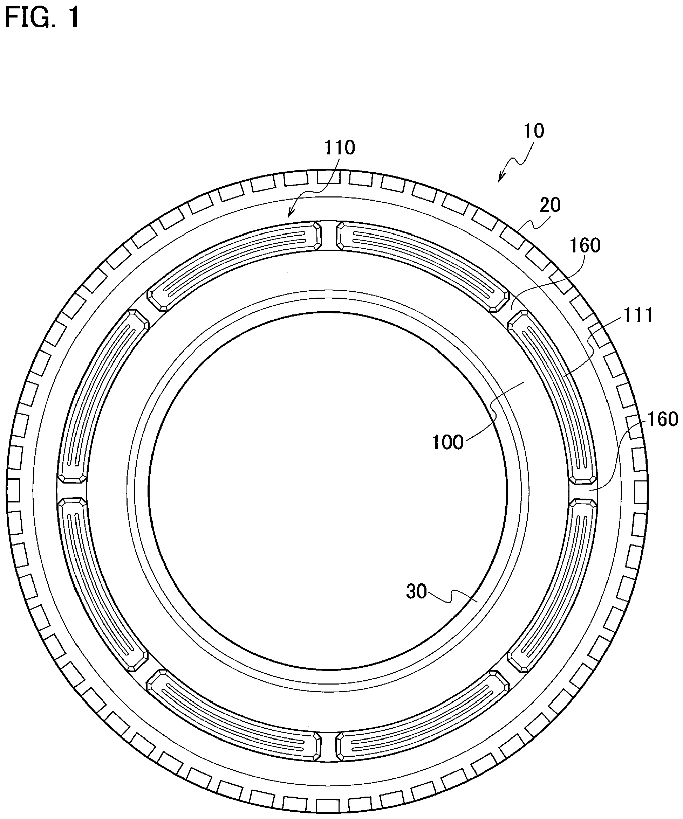

Fig. 1 is a side view illustrating a whole of a pneumatic tire 10 according to the present embodiment. The pneumatic tire 10 is formed as a radial tire for trucks or buses (heavy load pneumatic tire), especially formed as a tire mounted to a route bus that repeatedly stops at bus stops. A size of the pneumatic tire 10 is not especially limited, however examples of a general size of the tire used for the route bus include 275/70R22.5, 245/70R19.5 and 205/80R17.5.

The pneumatic tire 10 is provided with a tread portion 20 that contacts a road surface, and a bead portion 30 mounted to a wheel rim (not shown). Further, the pneumatic tire 10 is provided with a tire side portion 100 formed between the tread portion 20 and the bead portion 30.

Although it is not illustrated in Fig. 1 and others, similar to a general heavy load pneumatic tire, the pneumatic tire 10 is provided with a carcass ply that forms a frame of the pneumatic tire 10, a pair of crossing belt layers arranged at an inner side of the tread portion 20 in a tire radial direction, and the like.

In the tread portion 20, a pattern (tread pattern) suitable to a property of a vehicle (bus) to which the pneumatic tire 10 is mounted (for example, a mainly low speed travelling vehicle or a mainly high speed travelling vehicle) and performance of the pneumatic tire 10 to be required (for example, low rolling resistance or wear resistance) is formed.

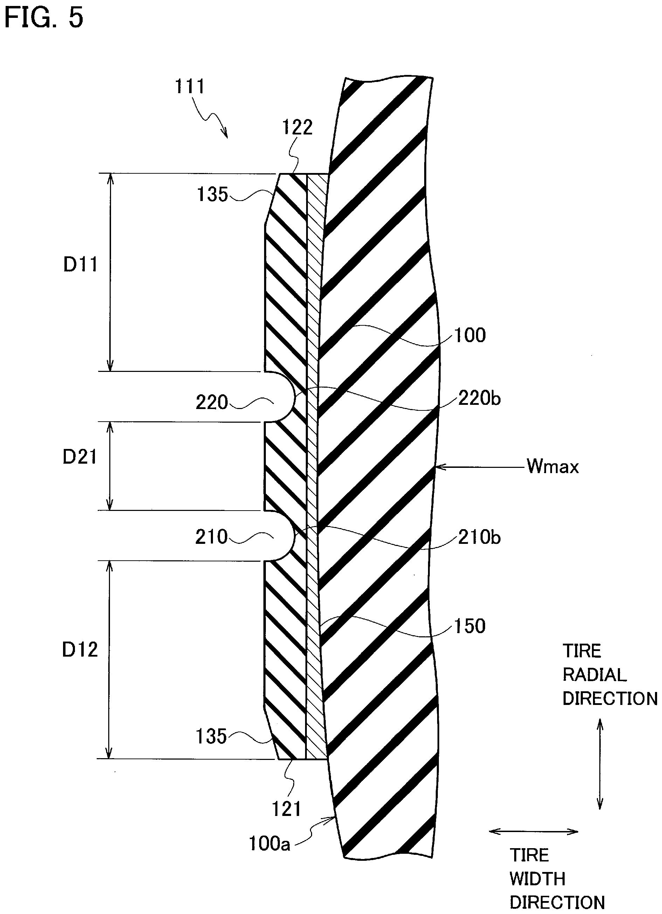

A protrusion portion 110 is formed on the tire side portion 100. The protrusion portion 110 is formed on a surface of a side wall 100a (not shown in Fig. 1, see Fig. 5) that forms an outer side wall surface of the tire side portion 100.

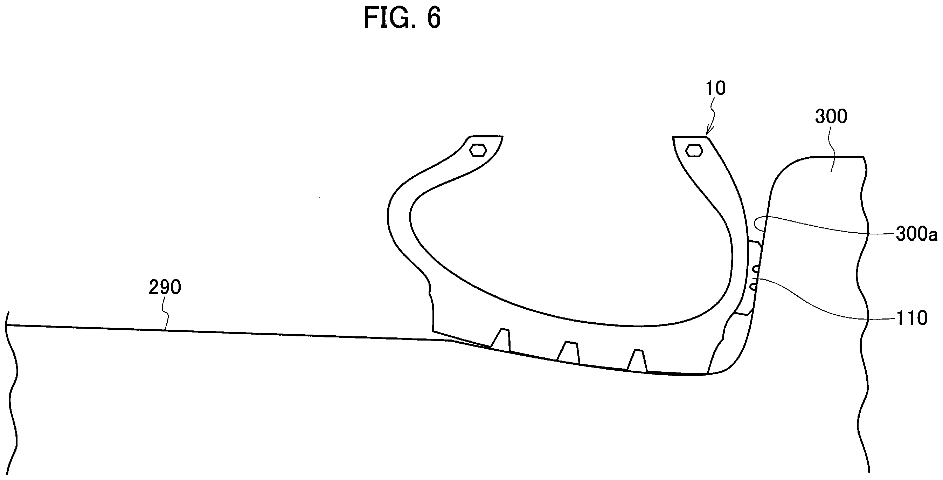

The protrusion portion 110 is protruded from the surface of the side wall 100a toward an outer side in the tire width direction. The protrusion portion 110 contacts a curbstone 300 (not shown in Fig. 1, see Fig. 6) first when the vehicle stops at a bus stop.

The protrusion portion 110 includes a first protrusion part 111 and a second protrusion part 160. The first protrusion parts 111 are arranged to form a circle along a tire circumferential direction. The second protrusion part 160 is continued to the first protrusion part 111 adjacent thereto in the tire circumferential direction and arranged between the first protrusion parts 111 adjacent to each other.

In this way, the second protrusion part 160 is interposed between the first protrusion parts 111 adjacent to each other, and the first protrusion parts 111 are arranged with predetermined gaps in the tire circumferential direction. That is, the first protrusion parts 111 are arranged with the predetermined gaps therebetween so as to form a circle along the tire circumferential direction.

A tire circumferential direction size of the first protrusion part 111 is larger than a tire circumferential direction size of the second protrusion part 160. Although it is described below, a height H1 from a surface of the side wall 100a to an outer surface of the first protrusion part 111 in the tire width direction is larger than a height H2 from the surface of the side wall 100a to an outer surface of the second protrusion part 160 in the tire width direction.

The protrusion portion 110 is formed of a rubber material similar to the tire side portion 100. The protrusion portion 110 may be formed of a rubber material having a friction coefficient lower than that of the other part in the tire side portion 110.

For example, a filler within a specific compounded range and a specific amide compound are added to the rubber composition adopted for the protrusion portion 110. Specifically, the rubber composition contains 30 parts by mass or more of carbon black, 10 parts by mass or less of silica, and 0.1-10 parts by mass of fatty acid amide based on 100 parts by mass of a rubber component.

The rubber component preferably contains 50 mass% or more of a diene rubber, more preferably 80 mass% or more of the diene rubber, most preferably 100 mass% of the diene rubber.

Examples of the diene rubber include a natural rubber (NR), a polyisoprene rubber (IR), a polybutadiene rubber (BR), a styrenebutadiene copolymer rubber (SBR), an ethylene-propylene-diene rubber (EPDM), a chloroprene rubber (CR), a butyl rubber (IIR), a halogenated butyl rubber, and an acrylonitrile-butadiene rubber (NBR).

The carbon black contained in the rubber composition is not especially limited. The carbon black having the grade of IISAF, N339, HAF, FEF, or GPF may be adopted. The fatty acid amide having a carbon number of 8-22 is preferable as the fatty acid amide contained in the rubber composition. Examples of the fatty acid amide include caprylic acid amide, lauric acid amide, myristic acid amide, palmitic acid amide, stearic acid amide, behenic acid amide, erucic acid amide, oleic acid amide, linoleic acid amide, and linolenic acid amide.

### (2) Configuration of protrusion portion 110

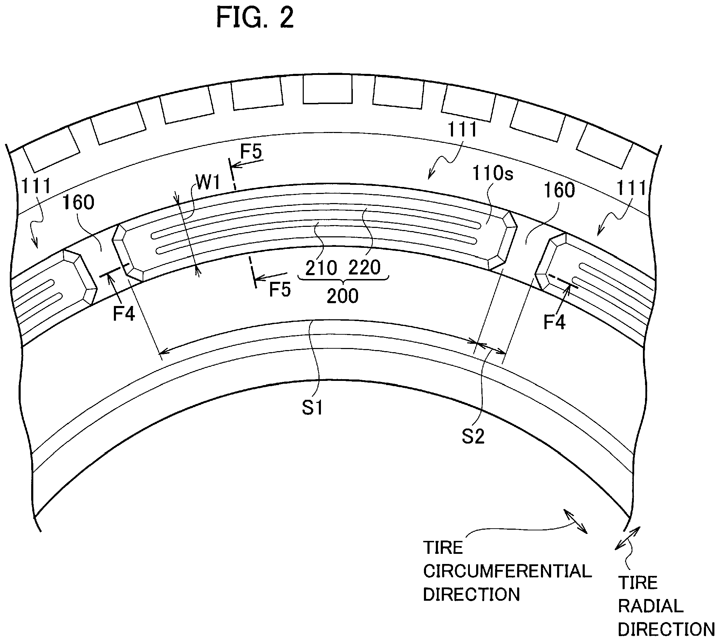

Next, a specific configuration of the protrusion portion 110 will be described. Fig. 2 is an enlarged side view illustrating a part of the protrusion portion 110.

As shown in Fig. 2, the first protrusion parts 111 are arranged with the second protrusion part 160 therebetween so as to form a circle along the tire circumferential direction. In the present embodiment, the second protrusion parts 160 arranged between eight first protrusion parts 111 are formed in the same size. That is, the first protrusion parts 111 are arranged at the same interval in the tire circumferential direction. However, the second protrusion parts 160 may not be formed in the same size.

A size of the first protrusion part 111 in the tire circumferential direction (tire circumferential direction size S1) is larger than a maximum width W1 of the first protrusion part 111 in the tire radial direction. That is, in a tire side view, the first protrusion part 111 is formed in an arc shape having a predetermined width in the tire radial direction. In other words, the first protrusion part 111 is a band with an arc shape extended in the tire circumferential direction.

Further, as described above, the tire circumferential direction size S1 of the first protrusion part 111 is larger than a tire circumferential direction size S2 of the second protrusion part 160.

In the present embodiment, a ratio of the first protrusion parts 111 and the second protrusion parts 160 on a circumference of the tire, specifically S1 / (S1 + S2), is preferably set in a range between 0.909 and 0.980. That is, 0.909 ≤ S1 / (S1 + S2) ≤ 0.980 is fulfilled. For example, as the tire circumferential direction size S1 is defined as 100, the tire circumferential direction size S2 is 2-10.

In the tire side view, a narrow groove 200 extended along the tire circumferential direction is formed on a surface 110s of the first protrusion part 111.

Specifically, the narrow groove 200 includes a first narrow groove 210 and a second narrow groove 220. The first narrow groove 210 is arranged at an inner side in the tire radial direction. The second narrow groove 220 is arranged at an outer side in the tire radial direction with respect to the first narrow groove 210.

Each of the first narrow groove 210 and the second narrow groove 220 is formed in an arc shape extended in the tire circumferential direction, similar to the first protrusion part 111.

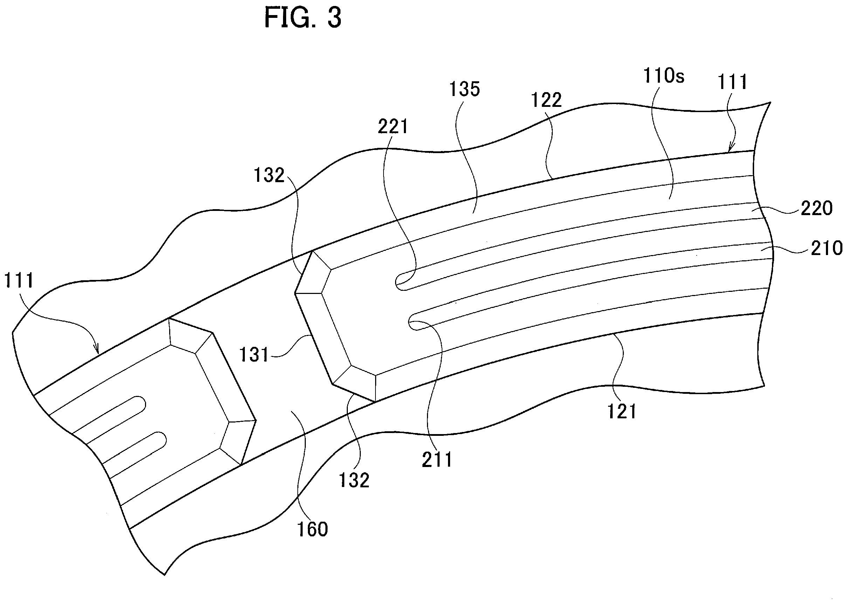

Fig. 3 is an enlarged side view illustrating a part of the first protrusion part 111 and the second protrusion part 160. As shown in Fig. 3, in the tire side view, the first protrusion part 111 includes an inner side portion 121 extended along the tire circumferential direction at an inner side in the tire radial direction and an outer side portion 122 extended along the tire circumferential direction at an outer side in the tire radial direction with respect to the inner side portion 121.

The first protrusion part 111 further includes a radial direction side portion 131 extended in the tire radial direction. The radial direction side portion 131 is continued to one end of the inner side portion 121 and one end of the outer side portion 122.

In the present embodiment, a corner of the protrusion part 111 where the inner side portion 121 and the radial direction side portion 131 intersect to each other is chamfered in the tire side view. The other end side of the protrusion part 111 in the tire circumferential direction is similar to that described above (see Fig. 2). Specifically, a chamfered portion 132 is formed on the corner of the protrusion part 111.

Further, in the present embodiment, an outer peripheral portion of the surface 110s of the first protrusion part 111 is chamfered in the tire side view. Specifically, a corner where the surface 110s of the first protrusion part 111 and the inner side portion 121 intersect to each other is chamfered.

More specifically, a chamfered portion 135 is formed on the corner of the first protrusion part 111. Similarly, a corner where the surface 110s and the outer side portion 122 intersect to each other and a corner where the surface 110s and the radial direction side portion 131 intersect to each other are also chamfered. That is, the chamfered portion 135 is arranged to form a circle on the outer peripheral portion of the first protrusion part 111.

The narrow groove 200, namely each of the first narrow groove 210 and the second narrow groove 220, is not opened to an end of the first protrusion part 111 in the tire circumferential direction but terminated within the first protrusion part 111. Specifically, each of the first narrow groove 210 and the second narrow groove 220 is not opened to the radial direction side portion 131 but terminated within the first protrusion part 111.

Further, in the tire side view, an end of the narrow groove 200 (first narrow groove 210 and second narrow groove 220) in the tire circumferential direction is formed round without an edge. Specifically, an end 211 of the first narrow groove 210 is formed in a semicircular shape in the tire side view. Also, an end 221 of the second narrow groove 220 is formed in a semicircular shape in the tire side view. That is, each of the end 211 and the end 221 is formed in a shape having a curvature (round shape).

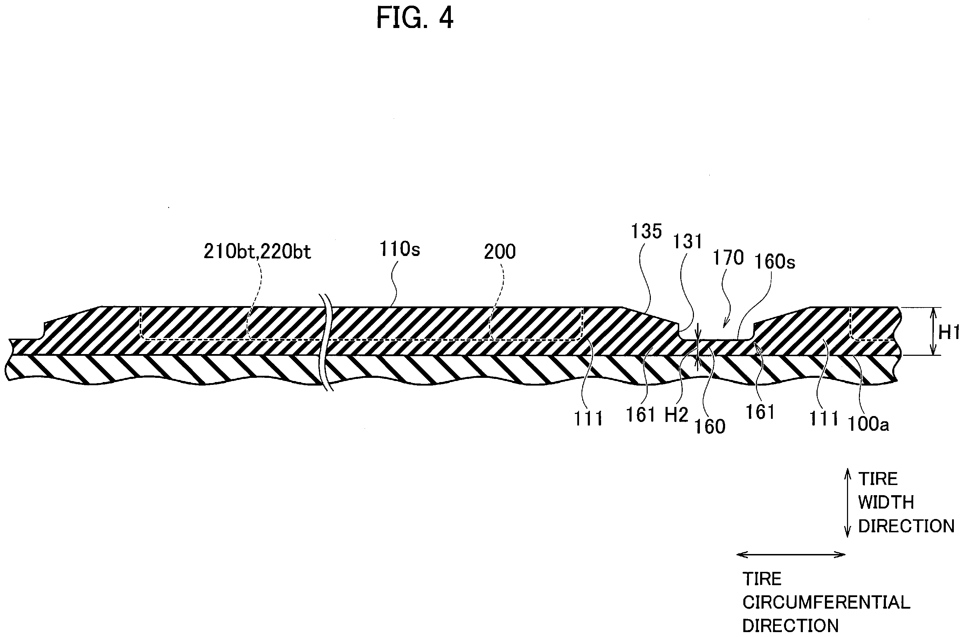

Fig. 4 is a cross-sectional view illustrating the protrusion portion 110 taken along line F4-F4 in Fig. 2. As shown in Fig. 4, the first protrusion part 111 is protruded from the side wall 100a to an outer side in the tire width direction. Further, the second protrusion part 160 is also protruded from the side wall 100a to the outer side in the tire width direction.

The first protrusion part 111 may be called a projection part, and the second protrusion part 160 may be called a bottom raised part.

The height H1 from the surface of the side wall 100a to the outer surface of the first protrusion part 111 in the tire width direction, namely a surface 110s of the first protrusion part 111, is larger than the height H2 from the surface of the side wall 100a to the outer surface of the second protrusion part 160 in the tire width direction, namely a surface 160s of the second protrusion part 160.

In the present embodiment, the height H1 is 3.0 mm, and the height H2 is 1.0 mm. Further, in the present embodiment, each of the height H1 and the height H2 is constant in the tire circumferential direction.

As described above, the first protrusion part 111 has the radial direction side portion 131 extended in the tire radial direction, and thereby a recess portion 170 is formed between the first protrusion parts 111 adjacent to each other. Further, a boundary 161 between the radial direction side portion 131 and the second protrusion part 160 is formed in a shape having a curvature (round shape).

In the present embodiment, the narrow groove 200, specifically a position of each of a first narrow groove 210B of the first narrow groove 210 and a groove bottom 220bt of the second narrow groove 220 (deepest position) is the same position as the outer surface of the second protrusion part 160 in the tire width direction, namely a position of the surface 160s in the tire width direction.

Fig. 5 is a cross-sectional view illustrating a part of the tire side portion 100 including the first protrusion part 111 taken along line F5-F5 in Fig. 2. As shown in Fig. 5, the first protrusion part 111 is protruded from the side wall 100a toward the outer side in the tire width direction.

The first protrusion part 111 is formed on the side wall 100 via an adhesive rubber layer 150. In the present embodiment, as described above, the thickness of the first protrusion part 111 in the tire width direction (namely, the height H1 shown in Fig. 4) is 3.0 mm, and a thickness of the adhesive rubber layer 150 in the tire width direction is 1.5 mm.

A whole or a part of the adhesive rubber layer 150 may be removed together with the protrusion portion 110 when the worn protrusion portion 110 (or only the first protrusion part 111) is replaced (re-side). Further, in the present embodiment, only the worn protrusion portion 110 is presupposed to be replaced, however a part of the tire side portion 100 (specifically, the side wall 100a) may be replaced together with the protrusion portion 110.

A width of each of the first narrow groove 210 and the second narrow groove 220 in the tire radial direction is 3.5 mm. A width of the chamfered portion 135 is also 3.5 mm. A height (thickness) of each of the inner side portion 121 and the outer side portion 122 in the tire width direction is 2.0 mm. That is, by forming the chamfered portion 135, the height of each of the inner side portion 121 and the outer side portion 122 is lower than the height of the surface 110s by 1.0 mm.

A position of the first protrusion part 111 in the tire radial direction is not especially limited. However considering the contact with the curbstone 300 (see Fig. 6), it may be considered that the protrusion part 111 is arranged in a region including a maximum width position Wmax in the tire width direction.

In the present embodiment, a distance D11 between an outer end of the first protrusion part 111 in the tire radial direction (position of the outer side portion 122) and an outer end of the second narrow groove 220 in the tire radial direction is longer than a distance D21 between an outer end of the first narrow groove 210 in the tire radial direction and an inner end of the second narrow groove 220 in the tire radial direction.

Further, a distance D12 between an inner end of the first protrusion part 111 in the tire radial direction (position of the inner side portion 121) and an inner end of the first narrow groove 210 in the tire radial direction is longer than the distance D21 between the outer end of the first narrow groove 210 in the tire radial direction and the inner end of the second narrow groove 220 in the tire radial direction.

That is, a length of the surface 110s between the end of the first protrusion part 111 and the end of the narrow groove 200 in the tire radial direction is longer than a length of the surface 110s between the first narrow groove 210 and the second narrow groove 220.

In the present embodiment, as shown in Fig. 5, a groove bottom of the narrow groove 200 is formed round without an edge in a sectional view along the tire width direction and the tire radial direction. That is, the groove bottom of the narrow groove 200 formed in a shape having a curvature (round shape).

Specifically, a groove bottom 210bt of the first narrow groove 210 is formed in a semicircular shape. Also, the groove bottom 220bt of the second narrow groove 220 is formed in a semicircular shape.

### (3) Functions and effects

Next, effects of the pneumatic tire 10 having the protrusion portion 110 will be described. Fig. 6 is a schematic view illustrating the pneumatic tire 10, which is mounted to a vehicle (not shown), contacting the curbstone 300.

As shown in Fig. 6, when the vehicle travelling on the road surface 290 approaches the curbstone 300, the protrusion portion 110 of the pneumatic tire 10 contacts a side surface 300a of the curbstone 300 first. With this, wear of the tire side portion 100 (the surface of the side wall 100a) caused by being rubbed directly with the curbstone 300 and failure caused by the wear can be prevented.

In this way, the protrusion portion 110 is served as a sacrificial worn portion that is worn prior to other part.

The protrusion portion 110 is formed by the first protrusion parts 111 and the second protrusion parts 160. The first protrusion parts 111 are arranged with the predetermined gaps therebetween so as to form a circle along the tire circumferential direction. With this, only the protrusion portion 110 worn largely (specifically, only the first protrusion part 111 worn largely) can be replaced (re-side). Further, the protrusion portion 110 may be replaced (re-side) together with the second protrusion part 160 and the adhesive rubber layer 150.

Further, the second protrusion part 160 of which a protrusion amount in the tire width direction is smaller than that of the first protrusion part 111, is arranged between the first protrusion parts 111 adjacent to each other. The tire circumferential direction size S1 of the first protrusion part 111 is larger than the tire circumferential direction size S2 of the second protrusion part 160.

With this, an amount of rubber can be decreased while securing a necessary function of the protrusion portion 110 that protects the tire side portion 100. Accordingly, a weight increase of the pneumatic tire 10 can be suppressed and thereby the rolling resistance thereof can be decreased.

Further, the second protrusion part 160 is continued to the first protrusion part 111 adjacent thereto, and thereby, when the protrusion portion 110 contacts the curbstone 300, the end of the first protrusion part 111 in the tire circumferential direction, specifically the radial direction side portion 131 and the chamfered portion 132, can be suppressed to be deformed and moved largely. With this, uneven wear caused from the end of the first protrusion part 111 in the tire circumferential direction as a wear core can be suppressed.

That is, according to the pneumatic tire 10 for which the side wall 100a having the protrusion portion 110 thereon can be replaced, both of sufficient durability of the protrusion portion 110 and high environment performance of the pneumatic tire 10 can be obtained.

In the present embodiment, in the tire side view, the narrow groove 200 extended along the tire circumferential direction is formed on the surface 110s of the first protrusion part 111. With this, even when the first protrusion part 111 contacts the side surface 300a of the curbstone 300 and thereby the stress is caused in the first protrusion part 111, the stress is hardly concentrated on a specific part of the first protrusion part 111 and therefore the durability of the first protrusion part 111 can be improved.

In the present embodiment the position of each of the first narrow groove 210B of the first narrow groove 210 and the groove bottom 220bt of the second narrow groove 220 (deepest position) is the same position as the outer surface of the second protrusion part 160 in the tire width direction, namely a position of the surface 160s in the tire width direction.

Thus, when the first protrusion part 111 is worn and the thereby the narrow groove 200 becomes invisible, the first protrusion part 111 functions as a wear indicator that invites the replacement (re-side) of the protrusion portion 110. Further, even when the first protrusion part 111 is worn, the tire side portion 100 can be protected by the remaining part of the first protrusion part 111 and the second protrusion part 160.

Further, when the first protrusion part 111 is worn, the remaining part of the first protrusion part 111 and the second protrusion part 160 are substantially continued in a flat manner in the tire circumferential direction. Consequently, the protrusion and recess does not exist in the tire circumferential direction, and thereby this configuration can facilitate the replacement (re-side) of the protrusion portion 110.

In the present embodiment, the tire circumferential direction size S1 of the first protrusion part 111 is larger than the maximum width W1 of the first protrusion part 111 in the tire radial direction. That is, the first protrusion part 111 is a band elongated in the tire circumferential direction, and thereby the first protrusion part 111 surely contacts the curbstone 300. Consequently, the protrusion portion 110 surely functions as the sacrificial worn portion.

In the present embodiment, the first protrusion part 111 and the second protrusion part 160 are formed such that 0.909 ≤ S1 / (S1 + S2) ≤ 0.980 is fulfilled. Thus, the weight increase of the pneumatic tire 10 can be suppressed while causing the first protrusion part 111 to surely function as the sacrificial worn portion. In a case in which S1 / (S1 + S2) is less than 0.909, it might be difficult to cause the first protrusion part 111 to function as the sacrificial worn portion.
While, in a case in which S1 / (S1 + S2) is more than 0.980, the weight increase of the pneumatic tire 10 is remarkable and the tire circumferential direction size S2 is extremely small, and thereby such a configuration might deteriorate the workability of the re-side when only the first protrusion part 111 is replaced.

### SECOND EMBODIMENT

### (1) Schematic whole configuration of tire

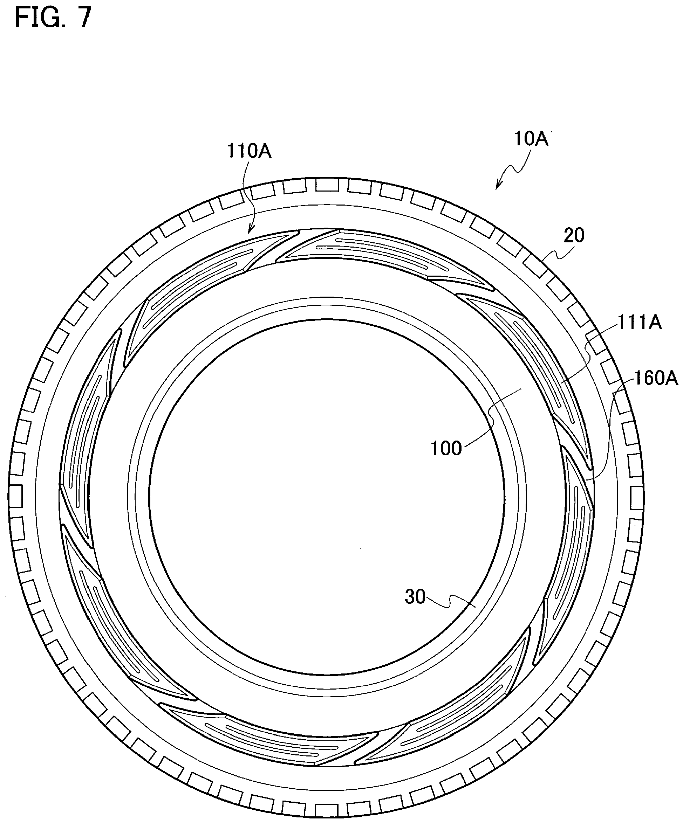

Fig. 7 is a side view illustrating a whole of a pneumatic tire 10A. Hereinafter, a configuration different from that of the pneumatic tire 10 described above will be described.

As shown in Fig. 7, a protrusion portion 110A is formed on the tire side portion 100 of the pneumatic tire 10A. The protrusion portion 110A includes a first protrusion part 111A and a second protrusion part 160A.

The first protrusion parts 111A are arrange to form a circle along the tire circumferential direction. The second protrusion part 160A is continued to the first protrusion part 111A adjacent thereto in the tire circumferential direction and arranged between the first protrusion parts 111 adjacent to each other.

### (2) Configuration of protrusion portion 110A

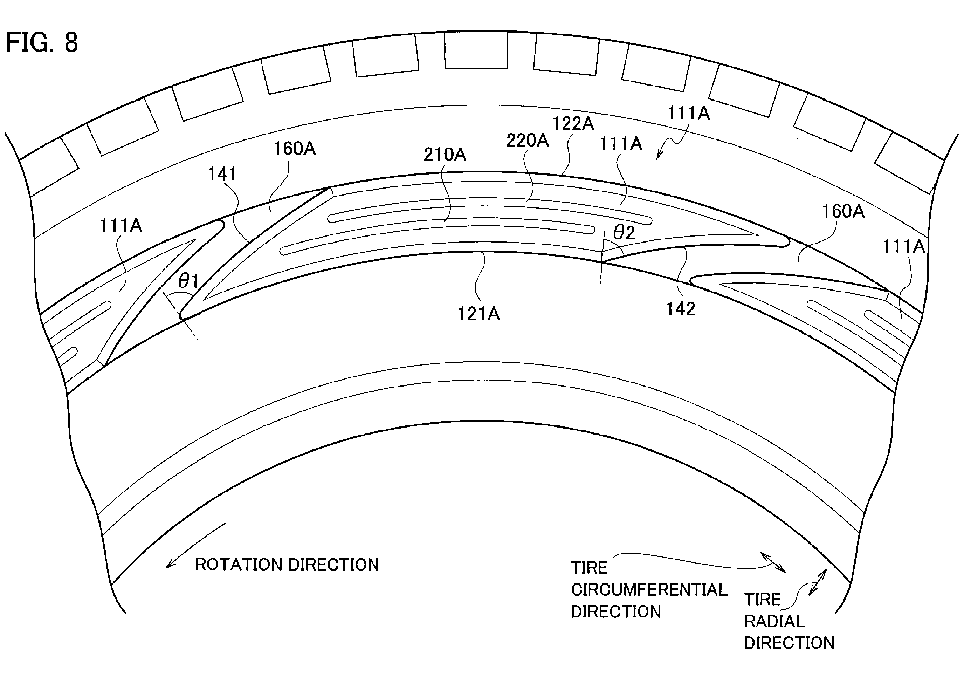

Fig. 8 is an enlarged side view illustrating a part of the protrusion portion 110A. As shown in Fig. 8, the first protrusion parts 111A adjacent to each other are arranged with the second protrusion parts 160A therebetween so as to form a circle along the tire circumferential direction.

In the tire side view, the first protrusion part 111A includes an inner side portion 121A extended along the tire circumferential direction at an inner side in the tire radial direction and an outer side portion 122A extended along the tire circumferential direction at an outer side in the tire radial direction with respect to the inner side portion 121A. Further, the first protrusion part 111A includes a first radial direction side portion 141 continued to one end of the inner side portion 121A and one end of the outer side portion 122A, and a second radial direction side portion 142 continued to the other end of the inner side portion 121A and the other end of the outer side portion 122A.

Further, a first narrow groove 210A and a second narrow groove 220A are formed on the first protrusion part 111A. Each of the first narrow groove 210A and the second narrow groove 220A is formed in an arc shape extended in the tire circumferential direction.

The first radial direction side portion 141 and the second radial direction side portion 142 are inclined in the same direction against the tire radial direction, in the tire side view. Further, an inclined angle θ1 of the first radial direction side portion 141 against the tire radial direction is smaller than an inclined angle θ2 of the second radial direction side portion 142. That is, the second radial direction side portion 142 is inclined against the tire radial direction more than the first radial direction side portion 141. Accordingly, the second protrusion part 160A is also formed to be inclined against the tire radial direction in accordance with the shape of each of the first radial direction side portion 141 and the second radial direction side portion 142.

In this way, the first protrusion part 111A is different from the first protrusion part 111 in the inclined angles of the first radial direction side portion 141 and the second radial direction side portion 142 against the tire radial direction. As shown in Fig. 2 and others, the radial direction side portion 131 of the first protrusion part 111 is extended along the tire radial direction, namely extended parallel to the tire radial direction. On the other hand, the first radial direction side portion 141 and the second radial direction side portion 142 of the first protrusion part 111A are extended not to be parallel to the tire radial direction but to be inclined against the tire radial direction.

A rotation direction (see an arrow in Fig. 8) of the pneumatic tire 10A is designated, and when approaching the curbstone 300, the first radial direction side portion 141 contacts the curbstone 300 first and then the second radial direction side portion 142 contacts the curbstone 300.

According to such a protrusion portion 110A, the first radial direction side portion 141 and the second radial direction side portion 142 are inclined against the tire radial direction such that a front end and a rear end of the first protrusion part 111A in the tire circumferential direction are tapered toward respective distal ends, and therefore an area of the first protrusion part 111A contacting the curbstone 300 can be substantially decreased at the front end and the rear end thereof. Consequently, the durability of the protrusion portion 110A can be further improved.

Also in the pneumatic tire 10A, the first protrusion part 111A and the second protrusion part 160A are formed such that 0.909 ≤ S1 / (S1 + S2) ≤ 0.980 is fulfilled. In the pneumatic tire 10A, the tire circumferential direction sizes S1 and S2 are defined based on center portions of the first protrusion part 111A and the second protrusion part 160A, respectively.

Further, also in the pneumatic tire 10A, a position of each of a groove bottom of the first narrow groove 210A and a groove bottom of the second narrow groove 220A (deepest position) is the same position as the outer surface of the second protrusion part 160A in the tire width direction.

### (3) Other embodiments

As described above, the contents of the present invention are described with reference to the examples, however the present invention is not limited to those descriptions but only by the appended claims.

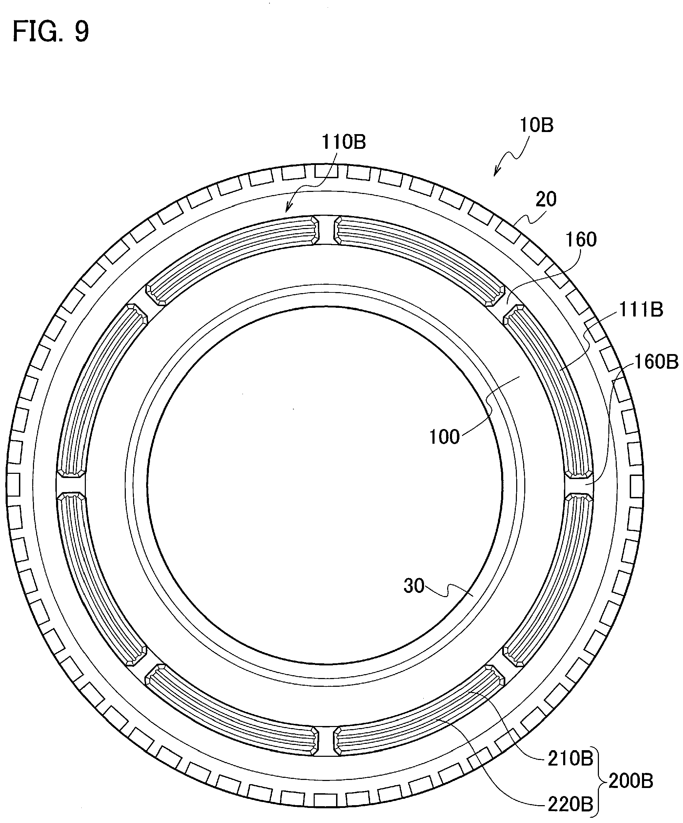

For example, the protrusion portion 110 described above may be further modified as below. Fig. 9 is a side view illustrating a whole of a pneumatic tire 10B according to a modified example. The pneumatic tire 10B is a modified example of the pneumatic tire 10 according to the first embodiment. Hereinafter, a configuration different from that of the pneumatic tire 10 is mainly described.

As shown in Fig. 9, a protrusion portion 110B is formed on a tire side portion 100 of the pneumatic tire 10B. The protrusion portion 110B includes a first protrusion part 111B and a second protrusion part 160B.

A narrow groove 200B is formed on the first protrusion part 111B. The narrow groove 200B includes a first narrow groove 210B and a second narrow groove 220B.

Each of the first narrow groove 210B and the second narrow groove 220B is opened to an end of the first protrusion part 111B in the tire circumferential direction.

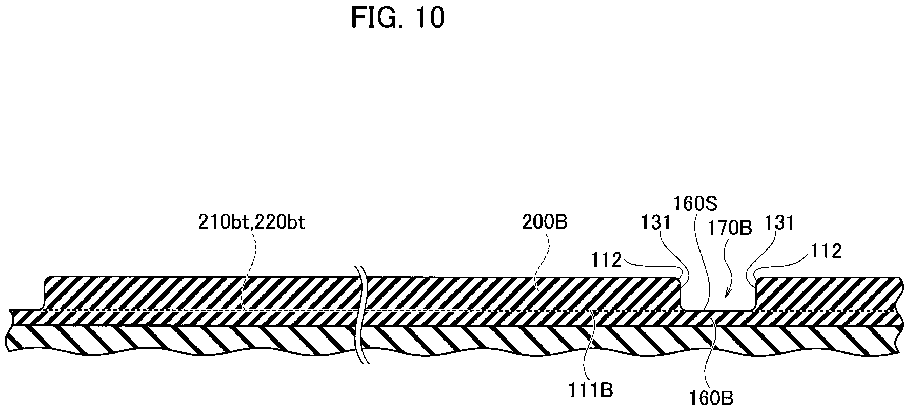

Fig. 10 is a cross-sectional view along the tire circumferential direction illustrating the protrusion portion 110B. Specifically, Fig. 10 is, similar to Fig. 2, a cross-sectional view illustrating the protrusion portion 110B taken along line F4-F4 shown in Fig. 2.

As shown in Fig. 10, a chamfered portion like the chamfered portion 135 of the protrusion portion 110 (see Fig. 4) is not formed in the protrusion portion 110B. An end 112 of the protrusion portion 110B in the tire circumferential direction is formed round. That is, the end 112 is formed in a shape having a curvature (round shape). A recess portion 170B is formed between the first protrusion parts 111B adjacent to each other.

Also in the protrusion portion 110B, the narrow groove 200B, specifically the position of each of the first narrow groove 210B of the first narrow groove 210B and a groove bottom 220bt of the second narrow groove 220B, is the same position as the outer surface of the second protrusion part 160B in the tire width direction, namely a position of the surface 160s in the tire width direction.

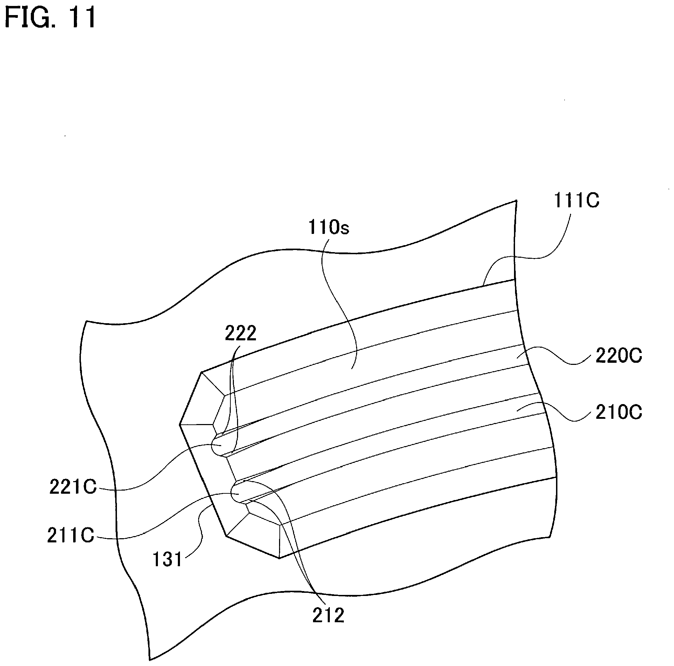

Further, the first protrusion part 111B may be modified as below. Fig. 11 is an enlarged side view illustrating a part of a first protrusion part 111C. As shown in Fig. 11, a first narrow groove 210C and a second narrow groove 220C, which are opened to a radial direction side portion 131, are formed on the first protrusion part 111C.

Specifically, an end 211C of the first narrow groove 210C and an end 221C of the second narrow groove 220C are opened to the radial direction side portion 131.

The first narrow groove 210C has a chamfered portion 212 for which a part of the first narrow groove 210C continued to the surface 110s of the first protrusion part 111C is chamfered. Similarly, the second narrow groove 220C has a chamfered portion 222 for which a part of the second narrow groove 220C continued to the surface 110s of the first protrusion part 111C is chamfered. The chamfered portion 212 (chamfered portion 222) is formed to be wider toward the end 211C (end 221C).

According to the first protrusion part 111C, since the end 211C and the end 221C are opened to the radial direction side portion 131, the followability of the first protrusion part 111C to the deformation can be improved. Further, since the chamfered portion 212 (chamfered portion 222) formed to be wider toward the end 211C (end 221C) is formed, although the first narrow groove 210C (second narrow groove 220C) is opened, it can be suppressed that the stress is concentrated on a specific part of the radial direction side portion 131.

That is, according to the first protrusion part 111C, the followability of the first protrusion part 111C to the deformation can be improved while securing the durability thereof.

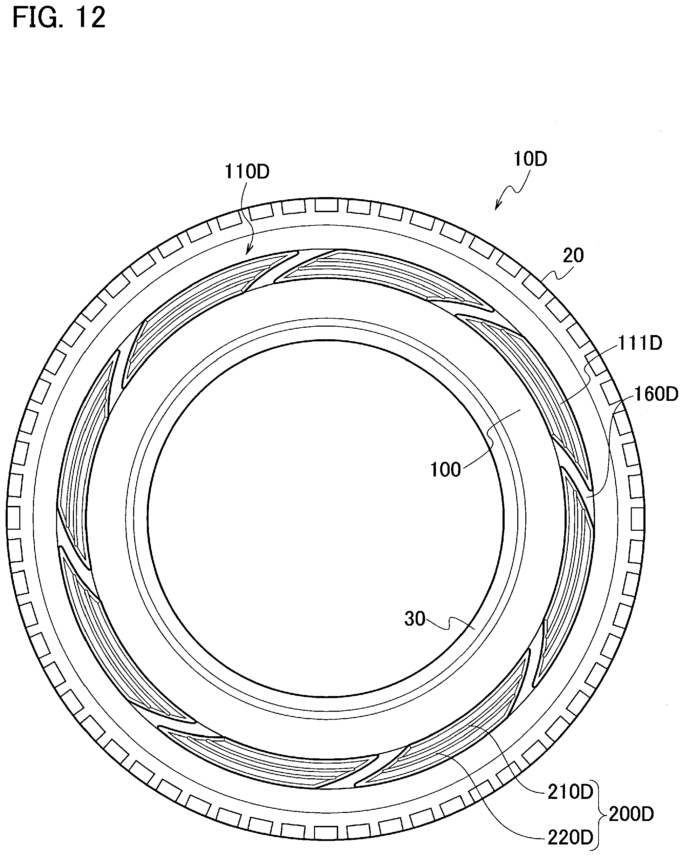

Fig. 12 is a side view illustrating a whole of a pneumatic tire 10D according to a modified example. The pneumatic tire 10D is a modified example of the pneumatic tire 10A according to the second embodiment. Hereinafter, a configuration different from that of the pneumatic tire 10A is mainly described.

As shown in Fig. 12, a protrusion portion 110D is formed on a tire side portion 100 of the pneumatic tire 10D. The protrusion portion 110D includes a first protrusion part 111D and a second protrusion part 160D.

A narrow groove 200D is formed on the first protrusion part 111D. The narrow groove 200D includes a first narrow groove 210D and a second narrow groove 220D.

In the protrusion portion 110D, similar to the protrusion portion 110B shown in Fig. 10 and Fig. 11, each of the first narrow groove 210D and the second narrow groove 220D is opened to an end of the first protrusion part 111D in the tire circumferential direction.

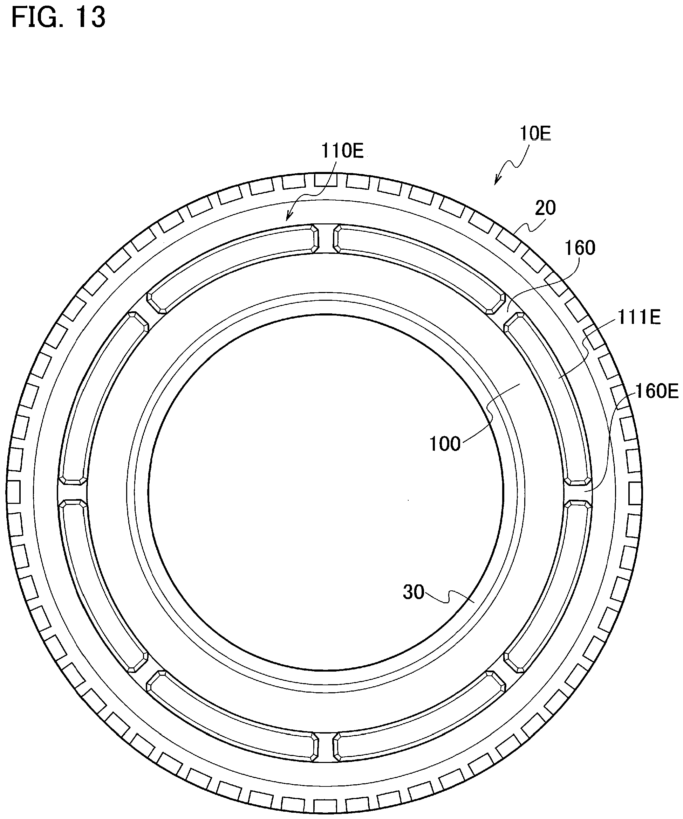

Fig. 13 is a side view illustrating a whole of a pneumatic tire 10E according to a modified example. The pneumatic tire 10E is a modified example of the pneumatic tire 10 according to the first embodiment. Hereinafter, a configuration different from that of the pneumatic tire 10 is mainly described.

As shown in Fig. 13, a protrusion portion 110E is formed on a tire side portion 100 of the pneumatic tire 10E. The protrusion portion 110E includes a first protrusion part 111E and a second protrusion part 160E.

The narrow groove 200 is not formed on the first protrusion part 111E, and this configuration is different from the pneumatic tire 10. That is, a recess portion including a narrow groove is not formed on a surface of the first protrusion part 111E, namely the first protrusion part 111E is a simple band with an arch shape.

Further, a sectional shape along the tire circumferential direction of the protrusion portion shown in Fig. 4 and others may be modified as below.

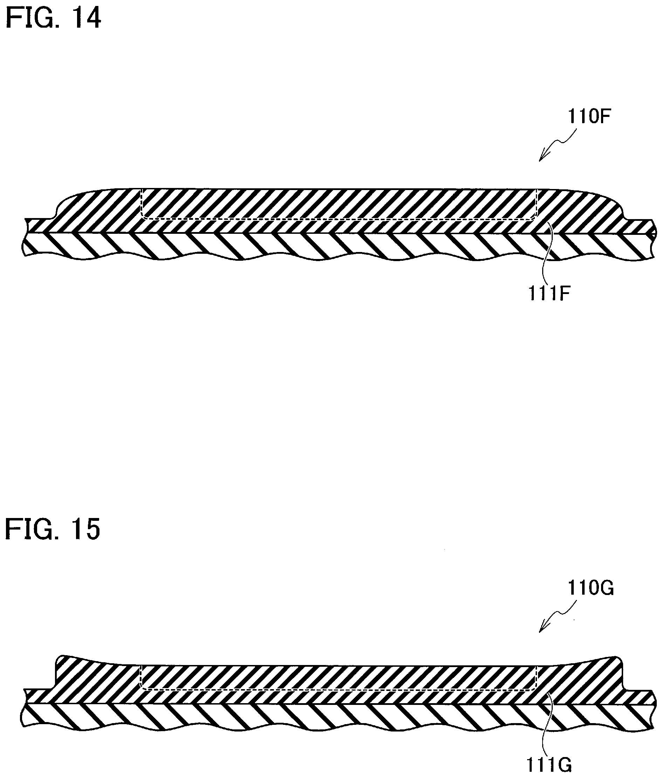

Fig. 14 is a cross-sectional view illustrating a protrusion portion 110F according to a modified example. Specifically, Fig. 14 is a cross-sectional view along the tire circumferential direction illustrating the protrusion portion 110F.

As shown in Fig. 14, a sectional shape of a first protrusion part 111F forming the protrusion portion 110F is an arc shape of which a thickness in the tire width direction is increased toward a center part in the tire circumferential direction. That is, the sectional shape of the first protrusion portion 111F is a dome-like shape in which the center part in the tire circumferential direction is protruded more than an end part in the tire circumferential direction.

Fig. 15 is a cross-sectional view illustrating a protrusion portion 110G according to a modified example. Specifically, Fig. 15 is a cross-sectional view along the tire circumferential direction illustrating the protrusion portion 110G.

As shown in Fig. 15, a sectional shape of a first protrusion part 111G forming the protrusion portion 110G is an arc shape of which a thickness in the tire width direction is decreased toward a center part in the tire circumferential direction. That is, the sectional shape of the first protrusion portion 111G is an opposite-dome-like shape in which an end part in the tire circumferential direction is protruded more than a center part in the tire circumferential direction.

Whether a shape like the protrusion portion 110F and the protrusion portion 110G is adopted may be determined in accordance with a use environment or necessary performance of the pneumatic tire.

In the protrusion portion 110F, since the center part in the tire circumferential direction is protruded, the center part is apt to contact the curbstone 300 first. With this, the wear and the damage of the end part of the protrusion portion 110F in the tire circumferential direction can be suppressed.

In the protrusion portion 110G, since the end part in the tire circumferential direction is protruded, the end part is apt to contact the curbstone 300 first. Accordingly, by causing the end part to actively contact the curbstone 300 and by setting the sectional shape to an opposite-dome-like shape, the thickness of the center part in the tire circumferential direction can be suppressed and the amount of rubber and the weight can be decreased.

In the embodiments described above, the groove depth of the narrow groove 200 is constant, however the groove depth may be varied in the tire circumferential direction. For example, in the protrusion portion 110F, the sectional shape of each of the first narrow groove 210B and the groove bottom 220bt (see Fig. 4) may be an arc shape, similar to the first protrusion part 111F, in which the center part in the tire circumferential direction is protruded more than the end part in the tire circumferential direction.

In the embodiments described above, the position of each of the first narrow groove 210B and the groove bottom 220bt (deepest position) is the same position as the outer surface of the second protrusion part 160 in the tire width direction, namely a position of the surface 160s in the tire width direction, however the position of each of the first narrow groove 210B and the groove bottom 220bt may not be the same position as the position of the surface 160s. That is, the surface 160s may be positioned at an outer side or an inner side with respect to the first narrow groove 210B and the groove bottom 220bt in the tire width direction.

Further, the chamfered portion 135 is formed in the first protrusion part 111 shown in Fig. 4, however the chamfered portion 135 may not be formed, while the end 112 with a round shape, which is similar to the first protrusion part 111B shown in Fig. 10, may be formed.

In the first embodiment (and the second embodiment) described above, the protrusion portion 110 (protrusion portion 110A) is formed of a rubber material having a friction coefficient lower than that of the other part in the tire side portion 100, however the rubber composition adopted for the protrusion portion 110 may not be formed of the rubber material having a friction coefficient lower than that of the other part in the tire side portion 100.

As described above, the embodiments of the present invention are described, however the present invention is not limited to the description and the drawings forming a part of the present disclosure but only by the appended claims.

### [Reference Signs List]

10, 10A, 10B, 10D, 10E: pneumatic tire
20: tread portion
30: bead portion
100: tire side portion
100a: side wall
110, 110A, 110B, 110D to 110G: protrusion portion
110s: surface
111, 111A to 111G: first protrusion part
112: end
121, 121A: inner side portion
122, 122A: outer side portion
131: radial direction side portion
132: chamfered portion
135: chamfered portion
141: first radial direction side portion
142: second radial direction side portion
150: adhesive rubber layer
160, 160A, 160B, 160D, 160E: second protrusion part
160s: surface
161: boundary
170, 170B: recess portion
200, 200B, 200D: narrow groove
210, 210A to 210D: first narrow groove
210bt, 220bt: groove bottom
211, 211C: end
212: chamfered portion
220, 220A to 220D: second narrow groove
221, 221C: end
222: chamfered portion
290: road surface
300: curbstone
300a: side surface

## Claims

1. A tire (10) comprising a protrusion portion (110) protruded from a surface of a side wall (100a) toward an outer side in a tire width direction,
wherein the protrusion portion (110) includes first protrusion parts (111) arranged to form a circle along a tire circumferential direction, and a second protrusion part (160) continued to the first protrusion part (111) adjacent thereto in the tire circumferential direction and arranged between the first protrusion parts (111) adjacent to each other,
wherein a tire circumferential direction size (S1) of the first protrusion part (111) is larger than a tire circumferential direction size (S2) of the second protrusion part (160), and
wherein a height (H1) from a surface of the side wall (100a) to an outer surface of the first protrusion part (111) in the tire width direction is larger than a height (H2) from the surface of the side wall (100a) to an outer surface of the second protrusion part (160) in the tire width direction,
wherein, in a tire side view, a narrow groove (200) extended along the tire circumferential direction is formed on a surface of the first protrusion part (111), **characterized in that**
a position of a groove bottom (210bt, 220bt) of the narrow groove (200) is the same position as the outer surface of the second protrusion part (160) in the tire width direction.

2. The tire according to claim 1, wherein the narrow groove (200) is not opened to an end of the first protrusion part (111) in the tire circumferential direction but terminated within the first protrusion part (111).

3. The tire according to claim 1 or 2, wherein the tire circumferential direction size of the first protrusion part (111) is larger than a maximum width of the first protrusion part (111) in a tire radial direction.

4. A tire (10) comprising a protrusion portion (110) protruded from a surface of a side wall (100a) toward an outer side in a tire width direction,
wherein the protrusion portion (110) includes first protrusion parts (111) arranged to form a circle along a tire circumferential direction, and a second protrusion part (160) continued to the first protrusion part (111) adjacent thereto in the tire circumferential direction and arranged between the first protrusion parts (111) adjacent to each other,
wherein a tire circumferential direction size (S1) of the first protrusion part (111) is larger than a tire circumferential direction size (S2) of the second protrusion part (160), and
wherein a height (H1) from a surface of the side wall (100a) to an outer surface of the first protrusion part (111) in the tire width direction is larger than a height (H2) from the surface of the side wall (100a) to an outer surface of the second protrusion part (160) in the tire width direction,
wherein, in a tire side view, a narrow groove (200) extended along the tire circumferential direction is formed on a surface of the first protrusion part (111);
wherein in the tire side view, the first protrusion part (111) includes an inner side portion (121) extended along the tire circumferential direction at an inner side in a tire radial direction, an outer side portion (122) extended along the tire circumferential direction at an outer side in the tire radial direction with respect to the inner side portion (121), a first radial direction side portion (141) continued to one end of the inner side portion (121) and one end of the outer side portion (122), and a second radial direction side portion (142) continued to the other end of the inner side portion (121) and the other end of the outer side portion (122),
**characterized in that**
the first radial direction side portion (141) and the second radial direction side portion (142) are inclined in the same direction against the tire radial direction, and **in that**
an inclined angle of the first radial direction side portion (141) against the tire radial direction is smaller than an inclined angle of the second radial direction side portion (142).

## Patentansprüche

1. Reifen (10), der einen Vorsprungsabschnitt (110) umfasst, der von einer Oberfläche einer Seitenwand (100a) hin zu einer in einer Reifenbreitenrichtung äußeren Seite vorspringt,
wobei der Vorsprungsabschnitt (110) erste Vorsprungsteile (111), die angeordnet sind, um einen Kreis entlang einer Reifenumfangsrichtung zu bilden, und einen zweiten Vorsprungsteil (160), der an den ersten Vorsprungsteil (111), der dazu in der Reifenumfangsrichtung benachbart ist, angeschlossen und zwischen den zueinander benachbarten ersten Vorsprungsteilen (111) angeordnet ist, einschließt,
wobei eine Größe (S1) in Reifenumfangsrichtung des ersten Vorsprungsteils (111) größer ist als eine Größe (S2) in Reifenumfangsrichtung des zweiten Vorsprungsteils (160), und
wobei eine Höhe (H1) von einer Oberfläche der Seitenwand (100a) bis zu einer Außenfläche des ersten Vorsprungsteils (111) in der Reifenbreitenrichtung größer ist als eine Höhe (H2) von der Oberfläche der Seitenwand (100a) bis zu einer Außenfläche des zweiten Vorsprungsteils (160) in der Reifenbreitenrichtung,
wobei, in einer Reifenseitenansicht, eine schmale Rille (200), die sich entlang der Reifenumfangsrichtung erstreckt, auf einer Oberfläche des ersten Vorsprungsteils (111) ausgebildet ist, **dadurch gekennzeichnet, dass**
eine Position einer Rillensohle (210bt, 220bt) der schmalen Rille (200) die gleiche Position ist wie die Außenfläche des zweiten Vorsprungsteils (160) in der Reifenbreitenrichtung.

2. Reifen nach Anspruch 1, wobei die schmale Rille (200) nicht zu einem Ende des ersten Vorsprungsteils (111) in der Reifenumfangsrichtung geöffnet, sondern innerhalb des ersten Vorsprungsteils (111) ausläuft.

3. Reifen nach Anspruch 1 oder 2, wobei die Größe in Reifenumfangsrichtung des ersten Vorsprungsteils (111) größer ist als eine maximale Breite des ersten Vorsprungsteils (111) in einer Reifenradialrichtung.

4. Reifen (10), der einen Vorsprungsabschnitt (110) umfasst, der von einer Oberfläche einer Seitenwand (100a) hin zu einer in einer Reifenbreitenrichtung äußeren Seite vorspringt,
wobei der Vorsprungsabschnitt (110) erste Vorsprungsteile (111), die angeordnet sind, um einen Kreis entlang einer Reifenumfangsrichtung zu bilden, und einen zweiten Vorsprungsteil (160), der an den ersten Vorsprungsteil (111), der dazu in der Reifenumfangsrichtung benachbart ist, angeschlossen und zwischen den zueinander benachbarten ersten Vorsprungsteilen (111) angeordnet ist, einschließt,
wobei eine Größe (S1) in Reifenumfangsrichtung des ersten Vorsprungsteils (111) größer ist als eine Größe (S2) in Reifenumfangsrichtung des zweiten Vorsprungsteils (160), und
wobei eine Höhe (H1) von einer Oberfläche der Seitenwand (100a) bis zu einer Außenfläche des ersten Vorsprungsteils (111) in der Reifenbreitenrichtung größer ist als eine Höhe (H2) von der Oberfläche der Seitenwand (100a) bis zu einer Außenfläche des zweiten Vorsprungsteils (160) in der Reifenbreitenrichtung,
wobei, in einer Reifenseitenansicht, eine schmale Rille (200), die sich entlang der Reifenumfangsrichtung erstreckt, auf einer Oberfläche des ersten Vorsprungsteils (111) ausgebildet ist;
wobei, in der Reifenseitenansicht, der erste Vorsprungsteil (111) einen inneren Seitenabschnitt (121), der sich entlang der Reifenumfangsrichtung an einer in einer Reifenradialrichtung inneren Seite erstreckt, einen äußeren Seitenabschnitt (122), der sich entlang der Reifenumfangsrichtung an einer in der Reifenradialrichtung äußeren Seite in Bezug auf den inneren Seitenabschnitt (121) erstreckt, einen ersten Radialrichtungsseitenabschnitt (141), der sich an ein Ende des inneren Seitenabschnitts (121) und ein Ende des äußeren Seitenabschnitts (122) anschließt, und einen zweiten Radialrichtungsseitenabschnitt (142), der sich an das andere Ende des inneren Seitenabschnitts (121) und das andere Ende des äußeren Seitenabschnitts (122) anschließt, einschließt,
**dadurch gekennzeichnet, dass**
der erste Radialrichtungsseitenabschnitt (141) und der zweite Radialrichtungsseitenabschnitt (142) in der gleichen Richtung gegen die Reifenradialrichtung geneigt sind, und dadurch, dass
ein Neigungswinkel des ersten Radialrichtungsseitenabschnitts (141) gegen die Reifenradialrichtung kleiner ist als ein Neigungswinkel des zweiten Radialrichtungsseitenabschnitts (142).

## Revendications

1. Pneumatique (10), comprenant une partie en saillie (110) faisant saillie depuis une surface d'une paroi latérale (100a) vers un côté externe, dans une direction de la largeur du pneumatique,
dans lequel la partie en saillie (110) inclut des premières parties en saillie (111) agencées pour former un cercle le long d'une direction circonférentielle du pneumatique, et une deuxième partie en saillie (160) s'étendant en continu vers la première partie en saillie (111) adjacente à celle-ci dans la direction circonférentielles du pneumatique et agencée entre les premières parties en saillie (111) adjacentes l'une à l'autre,
dans lequel une taille (S1) dans la direction circonférentielle du pneumatique de la première partie en saillie (111) est supérieure à une taille (S2), dans la direction circonférentielle du pneumatique, de la deuxième partie en saillie (160), et
dans lequel une hauteur (H1), d'une surface de la paroi latérale (100a) vers une surface externe de la première partie en saillie (111), dans la direction de la largeur du pneumatique, est supérieure à une hauteur (H2), de la surface de la paroi latérale (100a) vers une surface externe de la deuxième partie en saillie (160), dans la direction de la largeur du pneumatique,
dans lequel, dans une vue latérale du pneumatique, une rainure étroite (200) s'étendant le long de la direction circonférentielle du pneumatique, est formée sur une surface de la première partie en saillie (111), **caractérisé en ce que**
une position d'un fond de rainure (210bt, 220bt) de la rainure étroite (200) est la même position que la surface externe de la deuxième partie en saillie (160), dans la direction de la largeur du pneumatique.

2. Pneumatique selon la revendication 1, dans lequel la rainure étroite (200) n'est pas ouverte vers une extrémité de la première partie en saillie (111), dans la direction circonférentielle du pneumatique, mais se termine à l'intérieur de la première partie en saillie (111).

3. Pneumatique selon les revendications 1 ou 2, dans lequel la taille, dans la direction circonférentielle du pneumatique, de la première partie en saillie (111) est supérieure à une largeur maximale de la première partie en saillie (111), dans une direction radiale du pneumatique.

4. Pneumatique (10), comprenant une partie en saillie (110) faisant saillie depuis une surface d'une paroi latérale (100a) vers un côté externe, dans une direction de la largeur du pneumatique,
dans lequel la partie en saillie (110) inclut des premières parties en saillie (111) agencées pour former un cercle le long d'une direction circonférentielle du pneumatique, et une deuxième partie en saillie (160) s'étendant en continu vers la première partie en saillie (111), adjacente à celle-ci dans la direction circonférentielles du pneumatique, et agencée entre les premières parties en saillie (111) adjacentes l'une à l'autre,
dans lequel une taille (S1), dans la direction circonférentielle du pneumatique, de la première partie en saillie (111) est supérieure à une taille (S2), dans la direction circonférentielle du pneumatique, de la deuxième partie en saillie (160), et
dans lequel une hauteur (H1), d'une surface de la paroi latérale (100a) vers une surface externe de la première partie en saillie (111), dans la direction de la largeur du pneumatique, est supérieure à une hauteur (H2), de la surface de la paroi latérale (100a) vers une surface externe de la deuxième partie en saillie (160), dans la direction de la largeur du pneumatique,
dans lequel, dans une vue latérale du pneumatique, une rainure étroite (200) s'étendant le long de la direction circonférentielle du pneumatique, est formée sur une surface de la première partie en saillie (111) ;
dans lequel, dans la vue latérale du pneumatique, la première partie en saillie (111) inclut une partie latérale interne (121) s'étendant le long de la direction circonférentielle du pneumatique, au niveau d'un côté interne, dans la direction radiale du pneumatique, une partie latérale externe (122) s'étendant le long de la direction circonférentielle du pneumatique, au niveau d'un côté externe, dans la direction radiale du neumatique, par rapport à la partie latérale interne (121), une première partie latérale dans la direction radiale (141) s'étendant en continu vers une extrémité de la partie latérale interne (121) et une extrémité de la partie latérale externe (122), et une deuxième partie latérale dans la direction radiale (142) s'étendant en continu vers l'autre extrémité de la partie latérale interne (121) et l'autre extrémité de la partie latérale externe (122),
**caractérisé en ce que**
la première partie latérale dans la direction radiale (141) et la deuxième partie latérale dans la direction radiale (142) sont inclinées dans la même direction par rapport à la direction radiale du pneumatique, et **en ce que**
un angle d'inclinaison de la première partie latérale dans la direction radiale (141) par rapport à la direction radiale du pneumatique est inférieur à un angle d'inclinaison de la deuxième partie latérale dans la direction radiale (142).
